# EUROPÄISCHE PATENTANMELDUNG

(11) **EP 4 541 482 A1**
(43) Veröffentlichungstag der Anmeldung: **23.04.2025**
(21) Anmeldenummer: 24207193.4
(22) Anmeldetag: 17.10.2024
(51) Int. Cl.: B21D 39/04, B23D 17/06, B25B 23/145, B25B 27/10, G01M 99/00, H01R 43/042

(54) **ARBEITSGERÄT FÜR DEN EINSATZ IM SANITÄRBEREICH, INSBESONDERE PRESSWERKZEUG FÜR ROHRE UND DGL., SOWIE VERFAHREN ZUM BETRIEB DES ARBEITSGERÄTES**

(30) Priorität: 19.10.2023 DE 102023004230; 13.10.2024 DE 102024003360
(71) Anmelder: REMS GmbH & Co KG, 71332 Waiblingen (DE)
(72) Erfinder: Föll-Laubengeiger, Christoph, 70374 Stuttgart (DE); Wagner, Rudolf, 70376 Stuttgart (DE)
(74) Vertreter: Patentanwälte Jackisch-Kohl und Kohl

(57) **Zusammenfassung**

Das Arbeitsgerät ist insbesondere ein Presswerkzeug für Rohre und dgl. und weist eine für ein Werkzeug des Arbeitsgerätes vorgesehene Antriebseinheit auf, der eine elektronische Steuereinrichtung zugeordnet ist. Um mit diesem Arbeitsgerät eine optimale Arbeitsweise zu ermöglichen, weist die Steuereinrichtung wenigstens einen Mikrokontroller (37, 50) auf, der mit wenigstens einem Verbindungsmodul (38) versehen ist, das so vorkonfigurierbar ist, dass der Mikrokontroller (37, 50) über das Verbindungsmodul (38) selbstständig eine Netzwerkverbindung aufbaut und sich mit einer Cloud (32) bzw. einem Server/Datenspeicher verbindet und Daten austauscht. Das Arbeitsgerät baut nach dem Einschalten und/oder in Zeitabständen/Zeitpunkten und/oder nach bestimmten Betriebszuständen eine Netzwerkverbindung auf, verbindet sich mit einer Cloud (32) bzw. einem Server/Datenspeicher und tauscht Daten aus.

## Beschreibung

Die Erfindung betrifft ein Arbeitsgerät, insbesondere ein Presswerkzeug für Rohre und dgl., nach dem Oberbegriff des Anspruches 1 sowie ein Verfahren zum Betrieb des Arbeitsgerätes nach Anspruch 20.

Es sind Arbeitsgeräte in Form von Presswerkzeugen bekannt, mit denen Pressfittings für Rohrsysteme verpresst werden. Mit einer Antriebseinheit wird eine Presszange als Werkzeug derart angetrieben, dass der Pressfitting über seinen Umfang durch die Presszange radial verpresst wird. Die Antriebseinheit ist so ausgebildet, dass die Presszange nach Beendigung des Pressvorganges geöffnet wird, so dass das Presswerkzeug vom Rohrsystem bzw. vom Pressfitting abgenommen werden kann.

Der Erfindung liegt die Aufgabe zugrunde, das gattungsgemäße Arbeitsgerät und das Verfahren so auszubilden, dass eine optimale Arbeitsweise möglich ist.

Diese Aufgabe wird beim gattungsgemäßen Arbeitsgerät erfindungsgemäß mit den kennzeichnenden Merkmalen des Anspruches 1 und beim Verfahren erfindungsgemäß mit den Merkmalen des Anspruches 20 gelöst.

Das erfindungsgemäße Arbeitsgerät hat die Steuereinrichtung mit dem wenigstens einen Mikrokontroller. Er ist mit wenigstens einem Verbindungsmodul versehen. Es kann so vorkonfiguriert werden, dass der Mikrokontroller über das Verbindungsmodul selbstständig eine Netzwerkverbindung aufbaut und sich mit einer Cloud bzw. einem Server/Datenspeicher verbindet. Mit der Cloud bzw. dem Server/Datenspeicher lassen sich Daten austauschen.

Unter selbstständig ist zu verstehen, dass zum einen ohne Eingriff des Benutzers die Netzwerkverbindung aufgebaut wird, zum anderen, dass der Benutzer ein Betätigungssignal geben muss, damit die Netzwerkverbindung aufgebaut wird.

Bei einer vorteilhaften Ausführungsform baut der Mikrokontroller in regelmäßigen oder unregelmäßigen Zeitabständen oder Zeitpunkten über das Verbindungsmodul eine Netzwerkverbindung auf.

Bei einer anderen vorteilhaften Ausbildung baut der Mikrokontroller während oder nach bestimmten Betriebszuständen über das Verbindungsmodul die Netzwerkverbindung auf.

Vorteilhaft ist das Verbindungsmodul ein WiFi-Modul. Mit ihm lassen sich Betriebs- und/oder Einstelldaten vom Arbeitsgerät in die Cloud bzw. zum Server/Datenspeicher übersenden bzw. von dort abrufen.

Der WIFI-Baustein ist in vorteilhafter Weise innerhalb des ersten Mikrokontrollers gekapselt. Dadurch wird eine hohe Übertragungsqualität durch den WIFI-Baustein gewährleistet.

Als Verbindungsmodul kann in vorteilhafter Weise auch ein GSM-Modul eingesetzt werden, mit dem ebenfalls in einfacher Weise ein Datenaustausch möglich ist.

Als weitere Verbindungsmodule kommen beispielsweise CSD (Circuit Switched Data), HSCSD (High Speed Circuit Switched Data), GPRS (General Packet Radio Service), EDGE (Enhanced Data Rates for GSM) und dgl. in Betracht.

Besonders vorteilhaft ist es, wenn das Arbeitsgerät so ausgebildet ist, dass über wenigstens eine Funkschnittstelle eine Firmwareaktualisierung des Mikrokontrollers möglich ist. Als Funkschnittstelle kommen beispielhaft WLAN, ein Mobilfunknetz, Bluetooth, WiMax, IrDA, Low Power Wide Area Network (LPWAN) und andere bekannte Funkschnittstellen in Betracht.

Der Mikrokontroller kann bei einer vorteilhaften Ausführungsform in einen ersten Mikrokontroller und in mindestens einen weiteren Mikrokontroller aufgeteilt sein. Die Mikrokontroller sind hierbei vorteilhaft bidirektional miteinander verbunden, so dass eine Daten-/Signalübertragung in beiden Richtungen möglich ist.

Der erste Mikrokontroller ist vorteilhaft auf einer Platine angeordnet, die in einem Gehäuse des Arbeitsgerätes oder eines Akkupacks untergebracht ist.

Bei einer bevorzugten Ausführungsform ist der Mikrokontroller mit Schnittstellen versehen. Sie sind in vorteilhafter Weise zumindest für wenigstens einen internen oder externen Speicher, für wenigstens einen RTC, für wenigstens eine Kamera, für wenigstens eine Lichtquelle, für wenigstens ein Mikrofon, für wenigstens einen Signalgeber, für wenigstens einen Sensor, für wenigstens einen Aktuator, für wenigstens einen Schalter, für wenigstens einen Schnittstellbaustein eines Akkus versehen. Über diese Schnittstellen lassen sich die unterschiedlichsten Komponenten des Arbeitsgerätes anschließen. Je nach Ausstattung des Arbeitsgerätes können alle oder nur ein Teil der Schnittstellen des Mikrokontrollers belegt sein.

In vorteilhafter Weise kann an eine der Schnittstellen des ersten Mikrokontrollers eine Menüsteuerung angeschlossen werden, mit der Betriebs- und/oder Einstelldaten des Arbeitsgerätes eingestellt werden können.

Von Vorteil ist es, wenn die Übertragung von Daten aus dem Speicherbaustein an einen Cloudspeicher asynchron zur Bearbeitung mittels des Arbeitsgerätes erfolgt. Die Datenübertragung ist somit unabhängig vom jeweiligen Arbeitsvorgang, der mit dem Arbeitsgerät gerade durchgeführt wird und unabhängig davon, ob eine Verbindung zur Cloud besteht.

Das Arbeitsgerät ist vorteilhaft mit wenigstens einer Anzeige für Betriebs- und/oder Einstelldaten versehen, so dass die notwendigen Einstellungen direkt am Arbeitsgerät vorgenommen werden können. Ein zusätzliches Anzeigegerät, wie beispielsweise ein Handy oder ein Computer, ist darum nicht erforderlich. Dies ist besonders dann von Vorteil, wenn am Arbeitsort ein Handy bzw. ein Computer nicht zur Verfügung steht bzw. eine Datenübertragung über WLAN oder Bluetooth oder GSM-Modul nicht möglich ist. Dann können die erforderlichen Einstellungen direkt am Arbeitsgerät vorgenommen werden.

Die Einstellung der Betriebs- und/oder Einstelldaten ist in einfacher Weise dann möglich, wenn das Arbeitsgerät mit Einstellelementen versehen ist, beispielsweise mit Tastern, mit denen die Betriebs- und/oder Einstelldaten eingestellt werden können.

Bei einer vorteilhaften Ausführungsform ist die Platine zweiteilig ausgebildet. Die beiden Platinenteile befinden sich in unterschiedlichen Gehäusebereichen des Arbeitsgerätes. Sie kann aber auch einteilig ausgebildet sein.

Eine vorteilhafte Ausführungsform ergibt sich hierbei, wenn der eine Platinenteil in einem einen Griff bildenden Gehäusebereich und der andere Platinenteil in einem die Energieversorgung aufnehmenden Gehäusebereich untergebracht sind. Die zweiteilige Gestaltung der Platine ermöglicht es, die Steuereinrichtung auch in kompakten Geräten unterzubringen.

In vorteilhafter Weise sind an den zweiten Mikrokontroller Sensoren und Aktuatoren angeschlossen. Mit den Sensoren werden Betriebszustände erfasst, wie beispielsweise ein Pressdruck, eine Temperatur und dgl. Die entsprechenden Signale werden dem zweiten Mikrokontroller zugeführt, der diese Signale verarbeitet und/oder dem ersten Mikrokontroller zuführt.

Der zweite Mikrokontroller steuert die Aktuatoren an, wie beispielsweise die Antriebseinheit, die vorteilhaft ein Elektromotor ist.

Der Einsatz der beiden Mikrokontroller ermöglicht eine Aufteilung der Funktionen und Arbeitsweisen des Arbeitsgerätes. Insbesondere mit dem zweiten Mikrokontroller wird der Arbeitsablauf des Arbeitsgerätes gesteuert, während der erste Mikrokontroller hauptsächlich für Maschineneinstellungen und zur Datenübertragung an das Internet herangezogen wird.

An den zweiten Mikrokontroller ist vorteilhaft eine Energieversorgung angeschlossen. Mit Hilfe des zweiten Mikrokontrollers lässt sich beispielsweise überwachen, ob vor Beginn eines Arbeitsvorganges ausreichend Spannung vorhanden ist, um den geplanten Arbeitsablauf vollständig und sicher durchzuführen. Sollte dies nicht möglich sein, wird ein entsprechendes Warnsignal erzeugt und/oder die Antriebseinheit des Arbeitsgerätes gar nicht gestartet bzw. gestoppt.

Bei einer erfindungsgemäßen Ausbildung des Arbeitsgerätes als Presswerkzeug für Rohre und dgl. ist die Steuereinrichtung mit wenigstens einem Mikrokontroller und wenigstens einem Mikrofon und/oder wenigstens einer Kamera versehen. Mit Hilfe des Mikrofons und/oder der Kamera kann eine Sprachaufzeichnung und/oder eine Bild-/Videoaufzeichnung gemacht werden. So kann beispielhaft für jeden Pressvorgang vor und/oder nach der Pressung vom Benutzer des Presswerkzeuges eine Aufnahme des Pressbereiches und/oder eine Sprachaufnahme gemacht werden.

Bei einer weiteren vorteilhaften Ausbildung weist der Mikrokontroller wenigstens ein Verbindungsmodul auf, welches das Presswerkzeug mit einer Cloud, einem Server/Datenspeicher oder einem Endgerät verbindet und die Sprachaufzeichnung und/oder die Bild-/Videoaufzeichnung überträgt. Beim erfindungsgemäßen Verfahren baut das Arbeitsgerät nach dem Einschalten und/oder in Zeitabständen/Zeitpunkten und/oder nach bestimmten Betriebszuständen eine Netzwerkverbindung auf. Hierbei verbindet sich das Arbeitsgerät mit einer Cloud bzw. einem Server/Datenspeicher. Zwischen dem Arbeitsgerät und der Cloud bzw. dem Server/Datenspeicher werden Daten ausgetauscht.

Der Aufbau der Netzwerkverbindung erfolgt vorteilhaft in regelmäßigen Zeitabständen bzw. zu regelmäßigen Zeitpunkten.

Eine besonderes vorteilhafte Verfahrensführung ergibt sich, wenn ein Access-Point des Arbeitsgerätes aktiviert wird. Über diesen Access-Point werden die Daten des zu verwendenden Netzwerks an das Arbeitsgerät übermittelt. Hierbei kann das Arbeitsgerät die Verbindung vorteilhaft speichern, so dass zukünftig das Arbeitsgerät selbstständig die Verbindung herstellen kann.

Vorteilhaft ist es, wenn an das Arbeitsgerät über die drahtlose Verbindung Arbeitsdaten, wie Datum, Uhrzeit, Anzahl der durchgeführten Arbeiten, Positionsbestimmung des Arbeitsgerätes und dergleichen, übermittelt werden. So können beispielsweise bei jedem Arbeitsvorgang das Datum und die Uhrzeit festgehalten werden. Auch kann beispielsweise die Anzahl der durchgeführten Arbeitsvorgänge abgespeichert werden, so dass beispielhaft bei Erreichen einer bestimmten Zahl von Arbeitsgängen ein Signal erzeugt werden kann, um beispielsweise den Betriebszustand des Arbeitsgerätes zu überprüfen. Werden beispielsweise Daten hinsichtlich der Positionsbestimmung des Arbeitsgerätes übermittelt, dann kann in einer Karte der Ort visualisiert werden, an dem das Arbeitsgerät zum Einsatz gekommen ist.

Vorteilhaft ist es, wenn im Arbeitsgerät während des Arbeitsvorganges erfasste Daten während/oder nach dem Arbeitsvorgang dem externen Speicher bzw. der Cloud zugeführt werden. Dadurch stehen diese Daten jederzeit zur Verfügung und können bei Bedarf von externen Speichern bzw. der Cloud wieder an das Arbeitsgerät übermittelt oder beispielweise einem Computer, einem Handy oder dergleichen übermittelt werden.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird nachstehend anhand zweier in den Zeichnungen dargestellter Ausführungsformen näher erläutert. Es zeigen
- Fig. 1: in Seitenansicht ein erfindungsgemäßes Arbeitsgerät in Form eines Presswerkzeuges,
- Fig. 2: eine Ansicht in Richtung des Pfeiles II in Fig. 1,
- Fig. 3: in vereinfachter Darstellung das Zusammenspiel des erfindungsgemäßen Arbeitsgerätes mit einem Akkupack als Energieversorgung, einer Cloud sowie mit Anwendungen,
- Fig. 4: ein vereinfachtes Blockschaltbild einer Steuereinrichtung des erfindungsgemäßen Arbeitsgerätes,
- Fig. 5: ein vereinfachtes Blockschaltbild einer Steuereinrichtung einer weiteren Ausführungsform eines erfindungsgemäßen Arbeitsgerätes.

Im Folgenden wird als Arbeitsgerät beispielhaft ein Presswerkzeug beschrieben. Als Arbeitsgeräte kommen beispielhaft auch Reinigungs- und Spülgeräte für Rohrleitungssysteme in Betracht. Wenn daher nachstehend von einem Presswerkzeug die Rede ist, ist dies nicht als Beschränkung auf solche Werkzeuge zu verstehen.

Presswerkzeuge werden insbesondere im Sanitärbereich eingesetzt und dienen dazu, z. B. Presshülsen eines Pressfittings auf ein Rohr zu pressen und damit eine Rohrverbindung herzustellen.

Das Presswerkzeug PW als Arbeitsgerät hat eine Presszange 1, die zwei gegeneinander verschwenkbare Pressbacken 2, 3 aufweist, die um jeweils eine Achse 4, 5 gegeneinander schwenkbar sind. Die beiden Pressbacken 2, 3 sind als zweiarmige Hebel ausgebildet.

Das Presswerkzeug kann abweichend von der beschriebenen Zangenausbildung auch als Pressring gestaltet sein. Er besteht beispielsweise aus drei gelenkig miteinander verbundenen Pressbacken, die das zu pressende Werkstück umgeben und beim Pressvorgang das Werkstück über seinen Umfang plastisch verformen.

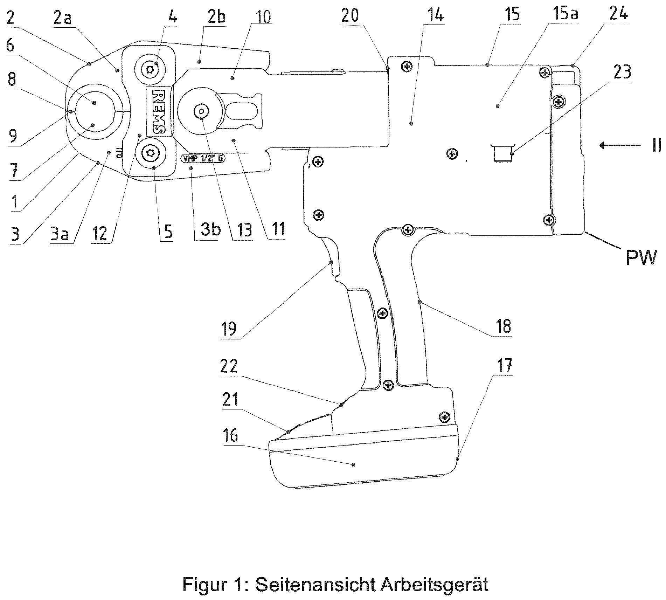

Jede Pressbacke 2, 3 ist an einem Ende mit einer Vertiefung 6, 7 versehen. Wenn die beiden Pressbacken 2, 3, wie in Fig. 1 dargestellt, mit ihren die Vertiefungen 6, 7 nach außen begrenzenden Enden 8, 9 aneinanderliegen, bilden die Vertiefungen 6, 7 eine Aufnahme für die gepresste (nicht dargestellte) Presshülse oder das verpresste Rohr.

Die Vertiefungen 6, 7 (Presskontur) sind jeweils an dem einen Hebelarm 2a, 3a der Pressbacken 2, 3 vorgesehen. Die anderen Hebelarme 2b, 3b der Pressbacken 2, 3 sind an ihren einander zugewandten Innenseiten mit Führungsflächen 10, 11 für Pressrollen (nicht dargestellt) versehen, die an einem axial verschiebbaren Vorschubkolben vorgesehen sind.

In der Ausgangslage ist dieser Vorschubkolben mit den Pressrollen so weit zurückgefahren, dass die Presszange 1 zum Einlegen des zu verpressenden Gegenstandes in die Vertiefungen 6, 7 geöffnet werden kann. Die Arme 2b, 3b der Pressbacken 2, 3 sind in bekannter Weise so federbelastet, dass sie am eingelegten Gegenstand anliegen. Beim Ausfahren des Vorschubkolbens gelangen die Pressrollen in Anlage an den Führungsflächen 10, 11, wodurch die Pressbacken 2, 3 um die Schwenkachsen 4, 5 so geschwenkt werden, dass die Hebelarme 2a, 3a in Richtung zueinander schwenken, bis sie am Ende des Pressvorganges die in Fig. 1 dargestellte Lage einnehmen, in welcher die Pressbacken 2,3 mit ihren Stirnseiten aneinanderliegen.

Der Vorschubkolben kann beispielhaft mechanisch, aber auch elektrisch, hydraulisch oder pneumatisch verschoben werden, um den Pressvorgang durchzuführen.

Die Schwenkachsen 4, 5 befinden sich in Verbindungslaschen 12, die an einander gegenüberliegenden Seiten der Presszange 1 vorgesehen sind. In Fig. 1 ist nur die eine Verbindungslasche 12 sichtbar. Die andere Verbindungslasche befindet sich auf der nicht sichtbaren Rückseite der Presszange 1.

Die Presszange 1 ist in bekannter Weise mittels eines Haltebolzens 13 an einer Antriebseinheit 14 des Presswerkzeuges PW lösbar befestigt.

Die Antriebseinheit 14 hat ein Gehäuse 15, in dem Antriebsmittel für den Vorschubkolben untergebracht sind, mit dem die Pressrollen zum Schlie-ßen der Presszange 1 betätigt werden.

Im Ausführungsbeispiel ist das Presswerkzeug ein tragbares Elektrowerkzeug, das mittels eines Akkupacks 16 als Energieversorgung betrieben wird. Der Akkupack 16 hat ein Gehäuse 17, das am freien Ende eines beispielhaft quer abstehenden Griffes 18 angeordnet ist, der Teil des Gehäuses 15 ist und in dem Komponenten der Antriebseinheit 14 untergebracht sein können. Das Gehäuse 17 ist lösbar am freien Ende des Griffes 18 befestigt, so dass der Akkupack 16 zum Aufladen einfach abgenommen und durch einen geladenen Akkupack ersetzt werden kann. Am Griff 18 befindet sich ein Schalter 19, mit dem das Presswerkzeug 1 eingeschaltet werden kann.

Der Griff 18 verbindet den Akkupack 16 mit einem Gehäuseteil 15a, in welchem der Antrieb für den Vorschubkolben untergebracht ist.

Bei Bedarf kann der Arbeitsplatz des Presswerkzeuges mit wenigstens einer Arbeitsleuchte 20, die vorteilhaft eine LED-Leuchte ist, beleuchtet werden, die vorteilhaft auf der Oberseite des Gehäuses 15 angeordnet ist.

Am Gehäuse 17 des Akkupacks 16 ist eine Ladezustandsanzeige 21 vorgesehen, die dem Anwender des Presswerkzeuges Auskunft über den Ladezustand des Akkupacks 16 gibt. Eine weitere Anzeige 22, die vorteilhaft im Bereich des Akkupacks 16 am Griff 18 vorgesehen ist, kann eine weitere Arbeitsplatzbeleuchtung sein und/oder kann Auskunft geben über die Qualität des Pressvorgangs oder anderer Informationen.

Das Gehäuse 15 ist an seiner einen Seite vorteilhaft mit einer Rückstelltaste 23 versehen, mit der der Druck im Hydrauliksystem des Presswerkzeuges PW (in Fehlersituationen) abgebaut werden kann. Das Gehäuse 15 ist außerdem an seiner von der Presszange 1 abgewandten Rückseite vorteilhaft mit einer Tragöse 24 versehen, in die ein Tragegurt eingehängt werden kann.

An der Rückseite des Gehäuses 15 befindet sich wenigstens ein Eingabeelement 26, 27, mit den Einstellungen am Presswerkzeug PW vorgenommen werden können. Als Eingabeelemente kommen Taster, Touch-Screen, Gestiksteuerung, Sprachsteuerung, HID (Human Interface Device) und dgl. in Frage.

Weiter ist an der Rückseite in vorteilhafter Weise eine Anzeige 28 vorgesehen, an der das Produkt konfiguriert werden kann und/oder Fehler, Hinweise, Statistiken, Auswertungen und dergleichen angezeigt werden können. Die Anzeige 28 hat vorteilhaft ein OLED-Display, das für eine gute Darstellung steht.

Schließlich ist an der Rückseite des Gehäuses 15 eine Maschinenzustandskontrolle 29, mit der beispielhaft der Akkuzustand oder Fehler angezeigt werden können, und ein Ein/Austaster 30 vorgesehen, mit dem das Presswerkzeug PW ein- und ausgeschaltet werden kann.

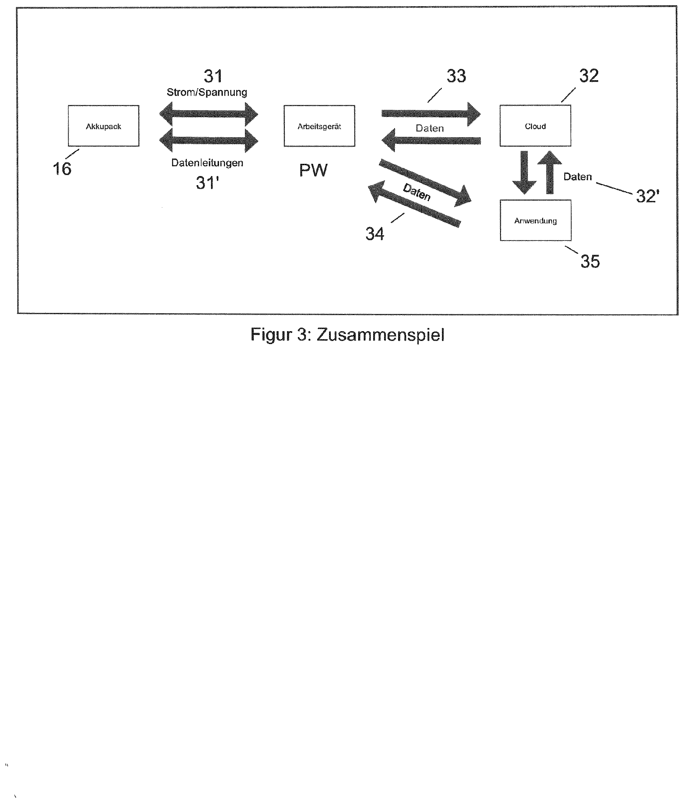

Das Presswerkzeug PW ist multifunktional ausgebildet und erlaubt dem Benutzer unterschiedlichste Einstellungen, Überwachungen und eine bidirektionale Datenübertragung. Wie aus Fig. 3 hervorgeht, ist der Akkupack 16 über eine Strom-/Spannungsverbindung 31 mit dem Presswerkzeug PW verbunden, damit Strom/Spannung in beiden Richtungen transportiert werden kann. Außerdem wird der Zustand des Akkupacks 16, z.B. der Ladezustand, die Temperatur, SOH (state of health) überwacht. Hierfür ist ein Austausch von Daten 31' zwischen dem Presswerkzeug PW und dem Ackupack 16 in beiden Richtungen vorgesehen. So kann zum Beispiel der Start des jeweiligen Pressvorganges in Abhängigkeit vom Zustand des Ackupacks 16 überwacht und gesteuert oder der Akkupack 16 durch Rekuperation wieder geladen werden.

Das Presswerkzeug PW kann mit einer Cloud 32 derart verbunden werden, dass Daten 34 in beiden Richtungen transportiert und gespeichert werden können.

Außerdem kann das Presswerkzeug PW mit einer Anwendung 35 derart verbunden werden, dass Daten 33 in beiden Richtungen transportiert und gespeichert werden können.

Die Cloud 32 kann mit einer Anwendung 35 derart verbunden werden, dass Daten 32' in beiden Richtungen transportiert und gespeichert werden können. Eine Weiterverarbeitung, z. B. eine Auswertung, eine Anreicherung oder eine Darstellung der Daten kann in der Cloud 32 und/oder in der Anwendung 35 erfolgen.

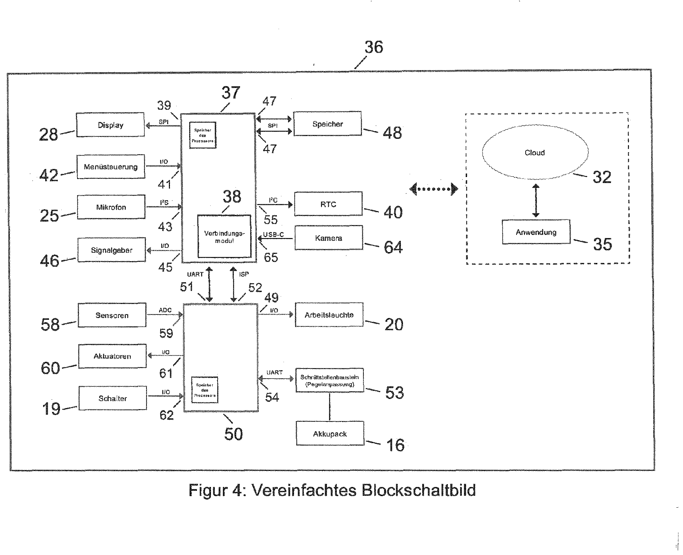

Die für die Multifunktionalität des Presswerkzeuges PW vorgesehene elektronische Steuereinrichtung wird anhand von Fig. 4 näher erläutert.

Die Steuereinrichtung hat eine Hauptplatine 36, die vorteilhaft im Gehäuse 15 des Presswerkzeuges untergebracht ist. Es besteht auch die Möglichkeit, die Hauptplatine 36 mehrteilig auszubilden, wobei z. B. der eine Hauptplatinenteil im Gehäuseteil 15a, 18 und ein weiterer Hauptplatinenteil im Gehäuse 17 des Akkupacks 16 untergebracht sein können. Die Hauptplatinenteile können unter einem Winkel zueinander angeordnet, beispielsweise von etwa 80°, und/oder fest miteinander verbunden sein. Wesentlich für die Steuerung ist ein Mikrokontroller 37 oder ein Verbund von Mikrokontrollern. Beispielhaft sitzt der Mikrokontroller 37 auf der Hauptplatine 36. Der Mikrokontroller 37 weist verschiedene Schnittstellen auf, die im Folgenden noch erläutert werden sollen.

Auf dem Mikrokontroller 37 befindet sich ein Verbindungsmodul 38, welches eine Verbindung zum Internet herstellen kann. Das Verbindungsmodul 38 ist beispielhaft ein WiFi-Modul. Über das Verbindungsmodul 38 lässt sich auch eine Verbindung zur Cloud 32 herstellen, die beispielhaft eine Mikrosoft Azure-Cloud ist, die eine Sammlung von Servern und Netzwerk-Komponenten aufweist, auf denen ein komplexer Satz verteilter Anwendungen ausgeführt werden kann.

Das Verbindungsmodul 38 erlaubt eine selbstständige oder gesteuerte Aktualisierung der Firmware (OTA) der Mikrokontroller 37 und 50 durch vorausgehenden Download aktualisierter Firmware aus z. B. der Cloud 32. An den Mikrokontroller 37 sind unterschiedliche Komponenten über entsprechende Schnittstellen angeschlossen. So ist über eine Schnittstelle 39, die beispielsweise eine SPI-Schnittstelle ist, eine Displayplatine 28 angeschlossen, die auf der Hauptplatine 36 angeordnet ist.

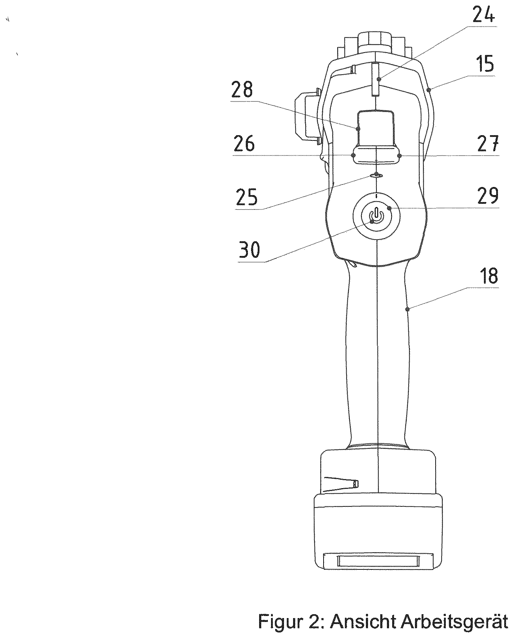

Über eine Schnittstelle 41, die beispielhaft eine I/O-Schnittstelle ist, erhält der Mikrokontroller 37 Signale von einer Menüsteuerung 42, über die beispielhaft Einstellungen am Presswerkzeug PW vorgenommen werden können. Zur Bedienung der Menüsteuerung 42 ist das Eingabeelement 26, 27 (Fig. 2) vorgesehen.

Über eine weitere Schnittstelle 43, vorzugsweise eine I²S-Schnittstelle, erhält der Mikrokontroller 37 Signale vom Mikrofon 25. Über die Schnittstelle 43 erhält der Mikrokontroller 37 die digitalen Audiodaten des Mikrophones 25, das ebenso wie die Menüsteuerung 42 auf der Hauptplatine 36 sitzen kann.

Grundsätzlich ist es auch möglich, die Steuerung des Presswerkzeuges PW mittels eines mobilen Devices, z. B. eines Smartphones oder iPADs, vorzunehmen, die auch als auf das Presswerkzeug PW aufsetzbares Gerät ausgebildet sein kann.

Über eine Schnittstelle 45, vorzugsweise eine I/O-Schnittstelle, sendet der Mikrokontroller 37 z. B. Signale, Melodien, Audioaufnahmen an einen Signalgeber 46 (beispielhaft einen Buzzer oder Lautsprecher), z. B. als Bestätigung bei Einstelloperationen am Presswerkzeug PW.

Über Schnittstellen 47, vorzugsweise eine SPI-Schnittstelle, ist an den Mikrokontroller 37 ein Speicher 48 angeschlossen, in dem Daten des Presswerkzeuges, wie beispielsweise Pressdauer, Presszahlen, Pressdrücke, Audioaufnahmen, Bild-/Videoaufnahmen, Ladezustand des Akkupacks 16 und dgl., gespeichert oder Daten vom Mikrokontroller 37 abgerufen werden können.

Über eine Schnittstelle 55, vorzugsweise eine I²C-Schnittstelle, ist an den Mikrokontroller 37 eine RTC (real time clock) 40 angeschlossen, die das Datum und die Uhrzeit für eine weitere Verwendung bereitstellt.

Über eine Schnittstelle 65, vorzugsweise eine USB-C-Schnittstelle, ist an den Mikrokontroller 37 eine Kamera 64 angeschlossen, die Bild-/Videoaufnahmen über die Schnittstelle 47 und den Mikrokontroller 37 an den Speicher 48 übermittelt.

Der Mikrokontroller 37 wird somit zu folgenden Funktionalitäten herangezogen: Steuerung des Displays 28, der Menüsteuerung 42, des Mikrofons 25, des Signalgebers 46, des Speichers 48, des RTC 40 und der Kamera 64.

Für die Motorsteuerung ist ein weiterer Mikrokontroller 50 vorgesehen, der beispielsweise auf der Hauptplatine 36 sitzt und über zwei Schnittstellen 51, 52 an den Mikrokontroller 37 angeschlossen ist. Die Schnittstelle 51 ist vorteilhaft eine UART-Schnittstelle (zum Datenaustausch) und die Schnittstelle 52 vorteilhaft eine ISP-Schnittstelle (zur Programmierung).

An den Mikrokontroller 50 ist der Akkupack 16 über einen Schnittstellenbauteil 53 angeschlossen, mit dem die erforderliche Pegelanpassung zwischen dem Akkupack 16 und dem Mikrokontroller 50 vorgenommen wird. Über eine Schnittstelle 54, vorzugsweise eine UART-Schnittstelle, ist ein bidirektionaler Daten-/Signalaustausch mit dem Schnittstellenbaustein 53 möglich.

Die Arbeitsleuchte 20 ist über eine Schnittstelle 49, vorzugsweise eine I/O-Schnittstelle, mit dem Mikrokontroller 50 verbunden.

Wie aus Fig. 4 hervorgeht, sind alle wesentlichen Komponenten der Steuerung auf der Hauptplatine 36 untergebracht, die verhältnismäßig kleine Abmessungen aufweist, so dass sie auch in kleinen Geräten, wie dem Presswerkzeug PW, untergebracht werden kann.

Der Mikrokontroller 37 ermöglicht über das Verbindungsmodul 38 eine Kommunikation mit der Cloud 32. Die WLAN-Reichweite im Freifeld ist ausreichend groß, so dass mit dem Presswerkzeug PW gearbeitet werden kann, ohne befürchten zu müssen, dass die Verbindung zur Cloud 32 unterbrochen ist. Ist die Verbindung zur Cloud 32 dennoch unterbrochen, werden alle anfallenden Daten im Speicher 48 des Presswerkzeugs PW zwischengespeichert und bei späterer Verbindung zur Cloud 32 an diese übertragen.

Mit den Eingabeelementen 26, 27 (Fig. 2) können Einstellungen am Presswerkzeug PW vorgenommen werden. Die jeweiligen Werte werden in der Anzeige 28 angezeigt. Über die Menüsteuerung 42 werden die entsprechenden Daten über die Schnittstelle 41 dem Mikrokontroller 37 übergeben, der sie im Speicher 48 ablegt. Mit der Menüsteuerung 42 lassen sich in einfacher Weise die Arbeitsweise des Presswerkzeuges PW, die Stärke der Beleuchtung der Arbeitsleuchte 20, die Dauer der Beleuchtung, die Standby-Zeit, Hinweistöne, die Uhrzeit und das Datum sowie das Datums- und Uhrzeitformat einstellen, der Signalgeber 46 ein- oder ausschalten. Vorteilhaft ist es auch möglich, die Zeitzone einzustellen, in welcher das Presswerkzeug PW eingesetzt wird. Weiter können mittels der Menüsteuerung 42 auch die Maßeinheiten und die Menüsprache eingestellt werden.

Mit Hilfe des Mikrofones 25 können Audionachrichten aufgenommen werden, die über die Schnittstelle 43 dem Mikrokontroller 37 zugeführt werden, der diese Audionachrichten im Speicher 48 ablegen kann. Vorteilhaft ist es hierbei möglich, dass die Audionachricht über die Cloud 32 in eine Textnachricht umgewandelt und ggfs. wieder im Speicher 48 des Presswerkzeugs PW abgespeichert werden kann.

Dem Mikrokontroller 50 werden Signale von Sensoren 58 über eine Schnittstelle 59 zugeführt, die vorteilhaft eine ADC-Schnittstelle ist. Als Sensoren kommen beispielsweise Drucksensoren, Temperatursensoren oder Sicherheitssensoren in Betracht, mit denen der Pressdruck, die Temperatur des Presswerkzeuges PW oder das vollständige Schließen des Presszangenhaltebolzens 13 oder die verwendete Presszange (Kontur, Größe, Seriennummer der Presszange, Anzahl durchgeführter Pressungen) erfasst werden. Sollten kritische Werte überschritten werden, dann können entsprechende Warnungen über den Signalgeber 46 vom Mikrokontroller 37 ausgegeben werden.

Der Mikrokontroller 50 dient weiter dazu, Aktuatoren 60 zu betreiben, die an eine Schnittstelle 61, vorzugsweise eine I/O-Schnittstelle, angeschlossen sind. Ein solcher Aktuator 60 ist beispielhaft die Antriebseinheit 14.

Schließlich ist ein Schalter 19 an eine Schnittstelle 62, vorzugsweise eine I/O-Schnittstelle, des Mikrokontrollers 50 angeschlossen.

Wird das Presswerkzeug PW mit dem Schalter 30 (Fig. 2) eingeschaltet und der Pressvorgang mit dem Schalter 19 gestartet, startet die Steuerung die Antriebseinheit 14, wenn der Akku des Akkupacks 16 ausreichend geladen und der Presszangenhaltebolzen 13 völlig geschlossen ist.

Über die Menüsteuerung 42 können verschiedene Fahrmodi eingestellt werden, zum Beispiel wie folgt:
Fahrmodus 1: Der Schalter 19 muss während des Pressvorgangs permanent gedrückt werden. Das Presswerkzeug PW beginnt den Pressvorgang und beendet diesen automatisch unter Abgabe eines akustischen Signals (Knacken) und läuft automatisch zurück (Zwangsablauf). Der Schalter 19 muss am Ende des Pressvorgangs losgelassen werden.

Fahrmodus 2: Der Schalter 19 muss während des Pressvorgangs permanent gedrückt werden. Das Presswerkzeug PW stoppt kurz vor Erreichen des erforderlichen Pressdrucks. Das völlige Schließen der Presszange, des Pressrings, der Presssegmente am Ende des Pressvorganges kann so besser beobachtet werden. Der Pressvorgang muss durch erneutes Betätigen des Schalters 19 fortgesetzt werden. Das Presswerkzeug PW beendet den Pressvorgang bei gedrücktem Schalter 19 automatisch unter Abgabe eines akustischen Signales (Knacken) und läuft automatisch zurück (Zwangsablauf). Der Schalter 19 muss am Ende des Pressvorgangs losgelassen werden.

Fahrmodus 3: Das Presswerkzeug PW beginnt den Pressvorgang bei gedrücktem Schalter 19 und läuft ab Beginn des Druckaufbaus auch nach dem Loslassen des Schalters 19 automatisch weiter und beendet den Pressvorgang unter Abgabe eines akustischen Signals (Knacken) und läuft automatisch zurück (Zwangsablauf).

Je nach Ausbildung des Presswerkzeugs PW können auch mehr oder weniger Fahrmodi vorgesehen sein.

Über den Mikroprozessor 50 und den Schnittstellenbaustein 53 ist der Steuerung bekannt, ob die Spannung des Akkupacks 16 für einen gewünschten Pressvorgang ausreichend ist. Sollte die Akkuspannung eine vorgesehene untere Grenze unterschreiten, ist eine weitere Pressung nicht mehr möglich.

Die Sensorsignale werden dem Mikroprozessor 50 übergeben, der beispielhaft überwacht, ob der Pressdruck innerhalb eines vorgegebenen Pressdruckbereiches liegt oder der Presszangenhaltebolzen 13 vollständig geschlossen ist. Ist dies der Fall, gibt der Mikroprozessor 50 über die Schnittstelle 51 ein entsprechendes Signal an den Mikroprozessor 37, der über die Schnittstelle 39 ein entsprechendes Signal an das Display 28 gibt, das entsprechend aufleuchtet und/oder eine Anzeige angezeigt wird.

Für einen ordnungsgemäßen Pressdruck sowie für einen nicht ordnungsgemäßen Pressdruck können unterschiedliche Lichtfarben der Arbeitsleuchte und/oder anderer Leuchten verwendet werden, so dass für den Benutzer sofort erkenntlich ist, ob der Pressdruck ausreichend war bzw. innerhalb vorgegebener Grenzwerte lag. Gleiches gilt beispielsweise auch für einen nicht völlig geschlossenen Presszangenhaltebolzen 13 oder andere Zustände.

Mit der Steuereinrichtung ist es zum Beispiel auch vorteilhaft möglich, über die Sensoren 58 den Pressdruckverlauf und den maximalen Pressdruck zu erfassen und die Sensordaten zu speichern. Die Steuereinrichtung überwacht, ob die bei der Pressung erforderliche Presskraft erreicht wurde, was einfach durch die Pressdruck-Überwachung festgestellt werden kann.

Mit Hilfe der Steuereinrichtung kann das Presswerkzeug PW an die Cloud 32 angebunden werden. Diese Anbindung erfolgt über das Verbindungsmodul 38, beispielsweise über ein WiFi-Modul. Hierzu kann beim Presswerkzeug PW der ACCESS-Point aktiviert werden, um über die dann beispielsweise auf einem mobilen Endgerät dargestellte Konfigurationsseite dem Presswerkzeug das zu verwendende WiFi-Netzwerk zu übermitteln. Danach verbindet sich das Presswerkzeug PW selbstständig mit der Cloud 32. Das Presswerkzeug PW speichert vorteilhaft die Verbindung, so dass zukünftig das Presswerkzeug selbstständig die Verbindung herstellen kann.

Über die WLAN-Anbindung des Presswerkzeuges ist es in einfacher Weise möglich, das Datum und die Uhrzeit zu empfangen und beispielhaft in die RTC 40 (real time clock) zu übernehmen, so dass mit jeder Pressung die Daten mit einem korrekten Zeitstempel im Speicher 48 abgelegt und auf der Anzeige 28 angezeigt werden können.

Weiter ist es beispielhaft möglich, mit Hilfe der Steuereinrichtung die Betriebszeiten des Presswerkzeuges PW und die Anzahl durchgeführter Pressungen im Speicher 48 abzulegen. Hierbei kann die gesamte Betriebszeit des Werkzeuges und die gesamte Anzahl durchgeführter Pressungen, aber auch die individuelle Betriebszeit und die individuelle Anzahl durchgeführter Pressungen abgespeichert werden.

Ebenso kann die Akkuspannung in der Cloud 32 abgelegt werden, des Weiteren z. B. der Strom-/Spannungsverlauf, die Restkapazität des Akkus, die Seriennummer des eingesetzten Akkus, die Innentemperatur der Antriebsmaschine, die Presszeit, der Hardwarestand und der Firmwarestand.

Das Presswerkzeug PW führt bei eingeschaltetem Wi-Fi-Modul 38 vor jeder Pressung einen Scan der verfügbaren Wi-Fi-Netzwerke aus und speichert diese Information zusammen mit den Pressdaten.

Nach Übertragung der Daten einer Pressung in die Cloud 32 versucht eine asynchron ablaufende Cloud-Function durch Verwendung einer Geolokalisierungs-API die Position des Pressortes ungefähr zu bestimmen. Bei erfolgreicher Ermittlung werden die ermittelten Geokoordinaten (Pressort) in der Cloud 32 gespeichert und können beispielhaft in einer Anwendung 35 in einer Karte visualisiert werden. Da alle Daten der Antriebsmaschine in der Cloud 32 zur Verfügung stehen, können in der Kartenansicht auch alle an einem Pressort durchgeführten Pressungen angezeigt und aufgerufen werden.

Auf dem auf der Hauptplatine 36 befindlichen Speicher 48 werden die Daten und, sofern vorhanden, auch eine Audio-/Bild-/Videoaufzeichnung, unmittelbar nach dem Pressvorgang gespeichert. Bei bestehender Verbindung mit der Cloud 32 findet die Übertragung dieser gespeicherten Daten und ggfs. Aufzeichnungen in die Cloud 32 statt. Besteht keine unmittelbare Verbindung, findet die Übertragung aller gespeicherten Daten und ggfs. Aufzeichnungen statt, sobald eine Verbindung mit der Cloud 32 wieder vorhanden ist.

Um das Speichervolumen des Speichers 48 möglichst gering zu halten, ist es vorteilhaft, wenn die Daten im Speicher 48 automatisch gelöscht werden, nachdem die Daten an die Cloud 32 erfolgreich übertragen sind.

Steht am Pressort des Presswerkzeuges PW ein mobiles Endgerät zur Verfügung, dann kann mit diesem eine Aufnahme (Foto, Video, Audio) gemacht werden, um z. B. Schadstellen am Bearbeitungsort, dem Einbauort selbst und dgl. festzuhalten. Die Aufnahmen können dann vom mobilen Endgerät über die Anwendung 35 hochgeladen, einer Pressung zugeordnet und in der Cloud 32 gespeichert werden.

In der Cloud 32 abgelegte Daten, z. B. Einstellungen des Presswerkzeuges PW, werden vom Presswerkzeug PW abgerufen und übernommen. Beispielhaft ist es über die Cloud 32 auch möglich, verschiedene Nutzungssperren beim Gebrauch des Presswerkzeug PW einzustellen und auf das Presswerkzeug PW zu übertragen, wie beispielhaft eine Sofortsperre zur Stilllegung des Presswerkzeug PW oder Einstellung von Rückmeldeintervallen in die Cloud als Diebstahlschutz, Einstellung von Zeit- und Datumsbereichen als Sperrzeiten, Einstellung zur Begrenzung der Anzahl durchführbarer Pressungen. Über die Anwendung 35 besteht darüber hinaus die Möglichkeit, mit einem Berechtigungskonzept auf alle Daten zuzugreifen.

Aus Sicherheitsgründen erfolgt die Datenübermittlung idealerweise verschlüsselt.

Die Steuereinrichtung ist weiter in vorteilhafter Weise so ausgebildet, dass bei einem Abbruch einer laufenden Datenübertragung zur Cloud 32 die Daten nicht verloren gehen. Treten Übertragungsfehler auf oder wird die Übertragung der Daten abgebrochen, wird die Datenübertragung erneut gestartet, sobald eine Verbindung zur Cloud 32 besteht. Hierbei ist es von Vorteil, wenn die Daten zunächst stets im Speicher 48 abgelegt werden, von dem die Daten dann, sobald die Verbindung zur Cloud 32 wieder besteht, an die Cloud 32 übertragen werden.

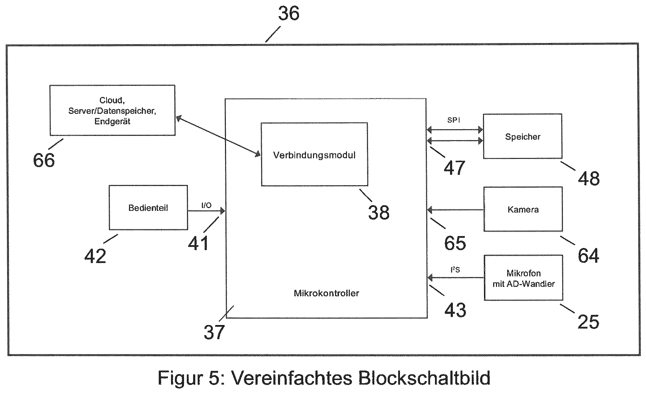

Fig. 5 zeigt das Blockschaltbild einer sehr einfachen Ausgestaltung des Arbeitsgerätes, insbesondere des Presswerkzeuges PW. Auf der Hauptplatine 36 sitzt der Mikrokontroller 37, der mit dem wenigstens einen Verbindungsmodul 38 versehen ist. Mit ihm ist eine Verbindung zur Umgebung 66 möglich. Die Umgebung 66 kann durch die Cloud 32, einen Server/Datenspeicher oder durch ein Endgerät gebildet sein. Diese Verbindung zwischen dem Verbindungsmodul 38 und der Umgebung 66 ist bidirektional ausgebildet.

Über die Schnittstelle 41 ist an den Mikrokontroller 37 die Menüsteuerung 42 angeschlossen, die in diesem Falle durch einen Bedienteil gebildet wird, mit dem Eingaben vorgenommen werden können.

Im Übrigen sind an den Mikrokontroller 37 in der beschriebenen Weise über die Schnittstelle 43 das Mikrofon 25, über die Schnittstelle 47 der Speicher 48 und über die Schnittstelle 65 die Kamera 64 angeschlossen. Das Mikrofon 25 ist entsprechend dem vorigen Ausführungsbeispiel vorteilhaft mit einem A/D-Wandler versehen.

Mit der Kamera 64 und dem Mikrofon 25 können Bild-/Video- und Sprachaufzeichnungen vorgenommen werden. Über das Verbindungsmodul 38 lassen sich die Signale der Sprachaufzeichnung und/oder der Bild-/Videoaufzeichnung an die Umgebung 66 übertragen, die durch die Cloud 32, durch einen Server/Datenspeicher oder durch ein Endgerät gebildet sein kann.

Auch mit dieser einfachen Ausführungsform lassen sich Sprach- und/oder Bild-/Videoaufzeichnungen vornehmen. Sie können beispielsweise in der Cloud 32 gespeichert werden. Die Übertragung dieser Daten erfolgt in der anhand des vorigen Ausführungsbeispiels beschriebenen Weise.

## Patentansprüche

1. Arbeitsgerät, insbesondere Presswerkzeug (PW) für Rohre und dgl., mit einer für ein Werkzeug (1) des Arbeitsgerätes (PW) vorgesehenen Antriebseinheit (14), der eine elektronische Steuereinrichtung zugeordnet ist,
**dadurch gekennzeichnet, dass** die Steuereinrichtung wenigstens einen Mikrokontroller (37, 50) aufweist, der mit wenigstens einem Verbindungsmodul (38) versehen ist, das so vorkonfigurierbar ist, dass der Mikrokontroller (37, 50) über das Verbindungsmodul (38) selbstständig eine Netzwerkverbindung aufbaut und sich mit einer Cloud (32) bzw. einem Server/Datenspeicher verbindet und Daten austauscht.

2. Arbeitsgerät nach Anspruch 1,
**dadurch gekennzeichnet, dass** der Mikrokontroller (37,50) in regelmäßigen oder unregelmäßigen Zeitabständen oder Zeitpunkten über das Verbindungsmodul (38) eine Netzwerkverbindung aufbaut.

3. Arbeitsgerät nach Anspruch 1 oder 2,
**dadurch gekennzeichnet, dass** der Mikrocontroller (37,50) während oder nach bestimmten Betriebszuständen über das Verbindungsmodul (38) eine Netzwerkverbindung aufbaut.

4. Arbeitsgerät nach einem der Ansprüche 1 bis 3,
**dadurch gekennzeichnet, dass** das Verbindungsmodul (38) ein WiFi-Modul ist.

5. Arbeitsgerät nach einem der Ansprüche 1 bis 3,
**dadurch gekennzeichnet, dass** das Verbindungsmodul (38) ein GSM-Modul ist.

6. Arbeitsgerät nach einem der Ansprüche 1 bis 5,
**dadurch gekennzeichnet, dass** der Mikrokontroller (37, 50) in einen ersten Mikrokontroller (37) und mindestens einen weiteren Mikrokontroller (50) aufgeteilt ist.

7. Arbeitsgerät nach Anspruch 6,
**dadurch gekennzeichnet, dass** die Mikrokontroller (37, 50) bidirektional miteinander verbunden sind.

8. Arbeitsgerät nach einem der Ansprüche 1 bis 7,
**dadurch gekennzeichnet, dass** der erste Mikrokontroller (37) auf einer Platine (36) sitzt, die in einem Gehäuse (15, 17, 18) des Arbeitsgerätes (PW) oder eines Akkupacks (16) untergebracht ist.

9. Arbeitsgerät nach einem der Ansprüche 1 bis 8,
**dadurch gekennzeichnet, dass** der Mikrokontroller (37, 50) Schnittstellen (39, 41, 43, 45, 47, 55, 65, 49, 54, 59, 61, 62) zumindest für wenigstens einen internen oder externen Speicher (48), für wenigstens einen RTC (40), für wenigstens eine Kamera (64), für wenigstens eine Lichtquelle (20), für wenigstens ein Mikrofon (25), für wenigstens einen Signalgeber (46), für wenigstens einen Sensor (58), für wenigstens einen Aktuator (60), für wenigstens einen Schalter (19), für wenigstens einen Schnittstellenbaustein (53) eines Akkupacks (16) aufweist.

10. Arbeitsgerät nach einem der Ansprüche 6 bis 9,
**dadurch gekennzeichnet, dass** an eine der Schnittstellen (41) des ersten Mikrokontrollers (37) eine Menüsteuerung (42) angeschlossen ist.

11. Arbeitsgerät nach einem der Ansprüche 1 bis 10,
**dadurch gekennzeichnet, dass** die Übertragung von Daten aus dem Speicher (48) an die Cloud (32) asynchron zur Bearbeitung mittels des Arbeitsgerätes (PW) erfolgt.

12. Arbeitsgerät nach einem der Ansprüche 1 bis 11,
**dadurch gekennzeichnet, dass** das Arbeitsgerät (PW) wenigstens eine Anzeige (22, 28) für Betriebs- und/oder Einstelldaten aufweist.

13. Arbeitsgerät nach einem der Ansprüche 1 bis 12,
**dadurch gekennzeichnet, dass** das Arbeitsgerät (PW) mit Einstellelementen (26, 27) versehen ist, mit denen die Betriebs- und/oder Einstelldaten einstellbar sind.

14. Arbeitsgerät nach einem der Ansprüche 1 bis 13,
**dadurch gekennzeichnet, dass** die Hauptplatine (36) aus zwei Platinenteilen besteht, die in unterschiedlichen Bereichen des Gehäuses (15, 17, 18) des Arbeitsgerätes (PW) oder des Akkupacks untergebracht sind.

15. Arbeitsgerät nach Anspruch 14,
**dadurch gekennzeichnet, dass** der eine Platinenteil in einem einen Griff bildenden Gehäusebereich (18) und der andere Platinenteil in einem die Energieversorgung aufnehmenden Gehäusebereich (17) untergebracht sind.

16. Arbeitsgerät nach einem der Ansprüche 1 bis 15,
**dadurch gekennzeichnet, dass** an den zweiten Mikrokontroller (50) Sensoren (58) und Aktuatoren (60) angeschlossen sind.

17. Arbeitsgerät nach einem der Ansprüche 1 bis 16,
**dadurch gekennzeichnet, dass** an den zweiten Mikrokontroller (50) die Energieversorgung (16, 53) angeschlossen ist.

18. Arbeitsgerät, insbesondere nach einem der Ansprüche 1 bis 17,
**dadurch gekennzeichnet, dass** die Steuereinrichtung wenigstens einen Mikrokontroller (37) und wenigstens ein Mikrofon (25) und/oder wenigstens eine Kamera (64) aufweist, sodass eine Sprachaufzeichnung und/oder Bild-/Videoaufzeichnung gemacht werden kann.

19. Arbeitsgerät nach Anspruch 18,
**dadurch gekennzeichnet, dass** der Mikrokontroller (37) wenigstens ein Verbindungsmodul (38) aufweist, welches das Presswerkzeug (PW) mit einer Cloud (32), einem Server/Datenspeicher oder einem Endgerät (66) verbindet und die Sprachaufzeichnung und/oder die Bild-/Videoaufzeichnung überträgt.

20. Verfahren zum Betrieb eines Arbeitsgerätes nach einem der Ansprüche 1 bis 19, bei dem das Arbeitsgerät (PW) nach dem Einschalten und/oder in Zeitabständen/Zeitpunkten und/oder nach bestimmten Betriebszuständen eine Netzwerkverbindung aufbaut und sich mit einer Cloud bzw. einem Server/Datenspeicher verbindet und Daten austauscht.

21. Verfahren nach Anspruch 20,
**dadurch gekennzeichnet, dass** die Netzwerkverbindung in regelmäßigen Zeitabständen bzw. zu regelmäßigen Zeitpunkten aufgebaut wird.

22. Verfahren nach Anspruch 20 oder 21,
**dadurch gekennzeichnet, dass** ein Access-Point des Arbeitsgerätes (PW) aktiviert wird, um dem Arbeitsgerät (PW) ein zu verwendendes Netzwerk zu übermitteln, so dass sich das Arbeitsgerät (PW) beim weiteren Einsatz selbständig mit dem Netzwerk verbinden kann.

23. Verfahren nach einem der Ansprüche 20 bis 22,
**dadurch gekennzeichnet, dass** dem Arbeitsgerät (PW) über die drahtlose Verbindung Arbeitsdaten, wie Datum, Uhrzeit, Anzahl der durchgeführten Arbeiten, Positionsbestimmungen des Arbeitsgerätes (PW) und dgl. übermittelt werden.

24. Verfahren nach einem der Ansprüche 20 bis 23,
**dadurch gekennzeichnet, dass** im Arbeitsgerät (PW) während des Arbeitsvorganges erfasste Daten während und/oder nach dem Arbeitsvorgang dem externen Speicher/Cloud zugeführt werden.

25. Verfahren nach einem der Ansprüche 20 bis 24,
**dadurch gekennzeichnet, dass** eine Firmware des Mikrokontrollers (37,50) über wenigstens eine Funkschnittstelle aktualisiert wird.
